# EUROPÄISCHE PATENTSCHRIFT

(11) **EP 1 442 421 B1**
(45) Veröffentlichungstag und Bekanntmachung des Hinweises auf die Patenterteilung: **05.04.2006**
(21) Anmeldenummer: 02781292.4
(22) Anmeldetag: 28.10.2002
(51) Int. Cl.: G06F 3/033

(54) **TAST- UND/ODER SCHREIBDRUCKAUFNEHMER**
TOUCH AND/OR WRITING PRESSURE DETECTOR
DISPOSITIF CAPTEUR DE PRESSION DE TOUCHER ET/OU D'ECRITURE

(30) Priorität: 01.11.2001 DE 10153404
(43) Veröffentlichungstag der Anmeldung: 04.08.2004
(73) Patentinhaber: Baltus, René, D-53125 Bonn (DE)
(72) Erfinder: Baltus, René, D-53125 Bonn (DE)
(74) Vertreter: Cohausz, Helge B.
(86) Internationale Anmeldenummer: PCT/EP2002/012005
(87) Internationale Veröffentlichungsnummer: WO 2003/038737

(56) Entgegenhaltungen:
- EP-A- 0 563 477
- DE-A- 19 719 188
- DE-A- 19 800 362
- GB-A- 2 183 843
- GB-A- 2 199 938

## Beschreibung

Die Erfindung betrifft eine Vorrichtung zur Aufnahme von Tast- und/oder Schreibdrücken auf einer federnd gelagerten Platte.

Schreibdruckaufnehmende Schriftprüfer sind bekannt. Unter anderem gilt der in der EP 0 560 356 beschriebene als wegweisend beim Einsatz herkömmlicher Schreibutensilien und ist zur forensischen Nutzung anerkannt. Der forensischen Anerkennung liegt die Tatsache zugrunde, daß die Schreibdruckwerte mit 1046 Werte/sec und gleichzeitig vier Schreibdruckkurven erstellt werden.

Nachteilig an dieser Vorrichtung ist jedoch, daß die Schreibplatte auf Drucksensoren gelagert ist. Diese Lagerung ist mit einer mechanischen Kopplung der Schreibplatte mit den Drucksensoren verbunden. Ohne diese Kupplung würde die Schreibplatte bei jeglicher zur Seite weisender Druckgebung verrutschen, wie sie z.B. beim Schreiben entsteht. Eine seitliche Begrenzung zur Vermeidung des Verrutschens bietet sich an, allerdings treten dann unkontrollierbare Reibungen dort auf, wo die Schreibplatte an die Begrenzung stößt.

Die Lagerung der Schreibplatte und die mechanische Kopplung der Schreibplatte mit den Sensoren hat wiederum zur Folge, daß jegliche Ausübung von Druck oder Schreibdruck unerwünschte Aus- und Rückwirkungen auf alle Drucksensoren hat. Weiterhin ist die Trägheit der Wägezellen von Nachteil. Dies insbesondere da die Dynamik des Schreibens schnelle Lastwechsel beinhaltet, denen die Wägezelle nicht folgen kann. Um die Daten forensischen Gutachten zugrund zu legen, ist eine maximale, dem jeweiligen Stand der Technik angepassten Datenausbeute zu verlangen und zur Verfügung zu stellen. Um die unerwünschten und die Errechnung der Druck- und Schriftdruckwerte und der Darstellung der Faksimile einer Unterschrift erschwerenden Tatsachen etwas zu kompensieren, kann die Schreibplatte mittels flexibler Verbindungen, z.B. Gummielement, an die Wägezellen gekoppelt werden. Damit wird aber nur eine unwesentliche Verbesserung erreicht.

Da man zur Vermeidung beim Schreiben ungewohnter seitlicher Verschiebungen der Schreibplatte und der dementsprechenden Ungenauigkeit beim Errechnen der Stiftposition keine weichen Materialien oder Gummimischungen wählen darf, sind durch Verkantungen Aus- und Rückwirkungen der Sensoren untereinander kaum auszuschließen. Um ein einigermaßen vernünftiges Ergebnis zu erzielen, sind bei jedem einzelnen Schriftprüfer aufwendige und teure dynamischen Messungen, Korrekturen und Eichungen unumgänglich. Ferner erfordern die Gummielemente ein Minimum an Bauhöhe um eine ausgleichende Wirkung zu erzielen. Dies ist jedoch von erheblichem Nachteil, da ein Schriftprüfer möglichst flach gestaltet sein muß, um eine bequeme und gewohnte Schrifteingabe zu ermöglichen.

Aus der GB 2 183 843 A ist ferner eine belastungsempfindliche Unterlage bekannt, die mit Hilfe zweier U-förmiger Träger, die jeweils an den Ecken der Unterlage angreifen, gegenüber einer Grundplatte federnd abgestützt ist. Die Träger weisen im Bereich ihrer Kopfenden Permanentmagnete auf, deren magnetisches Feld von Sensoren erfasst wird, wobei je nach auf die Unterlage ausgeübter Druckänderung, z.B. durch ein Schreibmittel, eine Relativbewegung zwischen Permanentmagnet und Sensor erzeugt wird, die von den elektromagnetischen Sensoren in elektrische Signale umgewandelt und in einer mit den Sensoren verbundenen Schaltung verarbeitet werden.

Die Verwendung von elektromagnetischen Feldern respektive entsprechender Sensoren stellt jedoch zur genauen Erfassung der horizontalen Teilbewegung bzw. Position der Unterlage eine sehr ungenaue Methode dar, da ein magnetfeldsensitiver Sensor im Falle des völligen Eintauchens in das Magnetfeld eines Permanentmagneten keine wesentliche Änderung seines Ausgangssignals erzeugt. Zur Überwindung dieses Nachteils wären große Sensoren notwendig, die viel Platz in Anspruch nehmen und einen hohen Energiebedarf aufweisen.

Kommen herkömmliche mit DMS (Dehnungsmessstreifen) bestückte Sensoren, wie z.B. eine Wägezelle, zur Anwendung, wird die Schreibplatte federnd gelagert, die Schreibplatte oder die Sensoren erhalten dann eine lediglich einseitig, vorzugsweise an der Wägezelle befestigte Komponente zur Krafteinleitung. Diese Komponente ist z.B. ein Kunststoffteil beliebiger geometrischer Form, wobei die Kontaktstelle zwischen Platte und Formstück vorzugsweise abgerundet oder kugelförmig gestaltet ist.

Nachteilig ist auch der hohe Beschaltungsaufwand und der hohe Energieverbrauch von DMS-bestückten Kraftsensoren. Ein Batteriebetrieb gestaltet sich daher schwierig und ist kostenintensiv.
Der Erfindung liegt die Aufgabe zugrunde, eine Vorrichtung und ein Verfahren zu entwickeln, daß die vorgenannten Nachteile vermeidet. Insbesondere gilt es besonders genaue Druckwerte zu erhalten. Ferner und/oder alternativ gibt es eine drucksensitive Oberfläche zu schaffen, die als Kursorsteuerung (Maussteuerung) verwendbar ist.

Diese Aufgaben werden erfindungsgemäß dadurch gelöst, daß die Bewegungen der Platte durch Abstandssensoren, insbesondere Wegmesser erfaßt und diese erfaßten Messwerte ausgewertet und gespeichert und/oder übertragen werden.

Die Schrifteingabeplatte ist so getrennt von der Sensorik federnd gelagert, daß eine mechanische Entkopplung zwischen Platte und Sensoren gegeben ist oder daß berührungslose abstandsmessende Sensoren zum Einsatz kommen.

Vorteilhafte Ausgestaltungen der Erfindung sind in den Unteransprüchen aufgeführt.

Im folgenden werden vorteilhafte Ausführungsbeispiele der Erfindung beschrieben.

Eine rechteckförmige Platte, insbesondere mit abgerundeten Ecken ist auf eine Unterlage oder in einem Gehäuse oder innerhalb einer Arbeits- oder Tischfläche federnd gelagert. Unterhalb der Platte sind Abstandssensoren angeordnet, die mit der Platte nicht verbunden sind, sondern zu dieser einen geringen Abstand bilden. Wird nun auf der Oberseite der Platte geschrieben und/oder mindestens auf gekennzeichneten Flächen der Oberseite /z.B. Zahlenfelder und/oder Buchstabenfelder) mit dem Finger oder einem Stift gedruckt, so gibt die Platte gegen den Federdruck der Federelemente nach und die Abstandsänderungen werden gemessen und gespeichert, ausgewertet und/oder übertragen.

Es wird somit lediglich der schreibdruckproportionale Abstand zwischen Schreibplatte und Sensor, z.B. durch eine Reflexlichtschranke, gemessen. Alternativ können auch induktive Tauchspulen oder kapazitive Abstandssensoren verwendet werden.
Handelsübliche Optische Sensoren, wie z.B. Reflexlichtschranken, haben weiterhin den Vorteil, daß sie einen extrem geringen Energieverbrauch haben. Preiswerte, in Massen hergestellte Reflexlichtschranken gestatten Messungen ab einem Abstand zur Schreibplatte von 0,7 mm. Dies ermöglicht extrem flache Schrifteingabegeräte. Die einfache Beschaltung derlei Reflexlichtschranken und der geringe Aufwand bei der Weiterverarbeitung der Signale sind ein weiterer Vorteil bei der wirtschaftlichen Umsetzung der Erfindung.

Eine Kombination von Sensoren zur Erfassung von Fingerabdrücken mit der o.a. Schreibplatte ist aus mindestens zwei Gründen sinnvoll.

Bekannt ist, daß zukünftig überwiegend zwei biometrische Merkmale zur Anwendung kommen werden: Die Unterschrift mit ihren in etwa gleichen Schwestern eigenhändig geschriebener PIN und Paßwörter, sowie der Fingerabdruck.

Erstere als aktive Willenserklärung, die man niemals ungewollt abgibt und letztere als schnelle Zugangskontrollen und bei kommerziellen Anwendungen mit niedrigen Werten, dem sogenannten Micropayment.

Es wird somit ein Schriftprüfer für Normalstifte geschaffen, der eine von den Kraftsensoren mechanisch entkoppelte durchsichtige Schrifteingabefläche hat und der die Schreib- und Tastdynamik über eine druckproportionale Wegstreckenänderung der Eingabefläche u.a. Reflexlichtschranken nutzt. Hierbei ist auch ein Batteriebetrieb möglich. Alternativ können die den Abstand messenden Sensoren auf der Unterseite der Schreibplatte befestigt sein und den Abstand zu einer Fläche unterhalb der Schreibplatte messen.

## Patentansprüche

1. Verfahren zur Aufnahme von Schreibdrücken, Unterschriften, eigenhändig geschriebener PIN oder Paßwörtern durch Messen, Speichern und Auswerten der Drücke und Druckänderungen, den eine schreibende Person auf eine Schrifteingabefläche ausübt, **dadurch gekennzeichnet, dass** der schreibdruckproportionale Abstand zwischen einer federnd gelagerten Schreibplatte und Sensoren mittels mindestens drei von der Schreibplatte mechanisch entkoppelten optischen Sensoren insbesondere in Form von Reflexlichtschranken gemessen wird.

2. Verfahren nach Anspruch 1, **dadurch gekennzeichnet, dass** die Reflexlichtschranken unterhalb der Schreibplatte, in einem Abstand zur Schreibplatte und seitlich der Schreibplatte angeordnet werden, so dass sie gegen die Schreibplattenunterseite strahlen.

3. Verfahren nach Anspruch 1 oder 2, **dadurch gekennzeichnet, dass** zur Einsparung von Energie und Raum ein Lichtsender, der seine Lichtstrahlen mittels Lichtleitfasern an die Meßpunkte lenkt, und vier getaktete Lichtempfänger die reflektierte Lichtstrahlen mittels Lichtleitfasern empfangen, als Sensoren verwendet werden.

4. Verfahren nach Anspruch 3, **dadurch gekennzeichnet, dass** der Lichtsender und der Lichtempfänger in bestimmter Entfernung, insbesondere bis zum Rechner oder Computer, montiert und mittels Lichtleitfasern verbunden werden.

5. Verfahren nach einem der vorherigen Ansprüche, **dadurch gekennzeichnet, dass** die Reflexlichtschranken in ein LCD-Display beliebiger Größe und geometrischer Form integriert werden und dass eine durchsichtige Schrifteingabefläche darüber angeordnet wird.

6. Verfahren nach einem der vorherigen Ansprüche, **dadurch gekennzeichnet, dass** ein LCD-Display mit beschreibbarer Oberfläche auf der Rückseite mit mindestens drei Reflexlichtschranken bestückt wird.

7. Verfahren nach einem der vorherigen Ansprüche, **dadurch gekennzeichnet, dass** die Bewegungen der Platte durch Abstandssensoren, insbesondere Wegmessern, erfasst und diese erfaßten Messwerte ausgewertet und gespeichert und/oder übertragen werden.

8. Verfahren nach Anspruch 5, **dadurch gekennzeichnet, dass** auf dem LCD-Display, über einen Zufallsgenerator die Position von Zahlen oder Buchstaben bei jeder Eingabeaufforderung so veränderbar sind, dass bei dem Eintippen einer PIN oder eines Passwortes auf der darüber angeordneten durchsichtigen, Schrifteingabefläche immer eine andere Stelle genutzt wird und somit von einem Beobachter keine Rückschlüsse auf die tatsächliche PIN oder auf das tatsächliche Passwort möglich ist.

9. Verfahren nach einem der vorherigen Ansprüche, **dadurch gekennzeichnet, dass** die Schrifteingabefläche mit mindestens einem Fingerabdrucksensor beliebiger Technologie kombiniert wird.

10. Verfahren nach Anspruch 9, **dadurch gekennzeichnet, dass** 10 Sensoren integriert werden, wobei jeder an einem Feld zur Eingabe einer PIN oder eines Paßwortes angeordnet wird und insbesondere bei jeder Abgabe der Fingersensor die Identität der Person überprüft.

11. Vorrichtung zur Aufnahme von Schreibdrücken, Unterschriften, eigenhändig geschriebener PIN oder Paßwörtern durch Messen, Speichern und Auswerten der Drücke und Druckänderungen, den eine schreibende Person auf eine Schrifteingabefläche ausübt, die über die Mittel verfügt zur Durchführung eines Verfahrens nach einem der Ansprüche 1 bis 10.

## Claims

1. Method of detecting writing pressures, signatures, handwritten PINs or passwords by measuring, storing and evaluating the pressures and changes in pressure exerted by a writer on a writing input surface, **characterised in that** the distance between a spring-mounted writing plate and sensors in proportion to the writing pressure is measured by means of at least three optical sensors mechanically isolated from the writing plate, in particular in the form of reflex sensors.

2. Method according to claim 1, **characterised in that** the reflex sensors are arranged below the writing plate, at a distance from the writing plate and laterally of the writing plate, so that they emit rays towards the underside of the writing plate.

3. Method according to claim 1 or claim 2, **characterised in that** an optical transmitter concentrating its light rays on the measuring points by means of optical fibres and four clocked optical receivers receiving reflected light rays by means of optical fibres are used as sensors in order to save energy and space.

4. Method according to claim 3, **characterised in that** the optical transmitter and the optical receiver are mounted at a specific distance, in particular from the computer, and are connected together by means of optical fibres.

5. Method according to one of the preceding claims, **characterised in that** the reflex sensors are integrated into an LCD display of any desired size and geometric shape and that a transparent writing input surface is arranged thereabove.

6. Method according to one of the preceding claims, **characterised in that** an LCD display with a recordable surface is provided on its rear face with at least three reflex sensors.

7. Method according to one of the preceding claims, **characterised in that** the movements of the plate are detected by distance sensors, in particular, position transducers and these detected measured values are evaluated and stored and/or transmitted.

8. Method according to claim 5, **characterised in that** the positions of numbers or letters on the LCD display can be varied at each input prompt by means of a random generator in such a manner that a different point is always used each time a PIN or a password is entered on the transparent writing input surface situated thereabove so that it is impossible for an observer to draw any inferences as to the actual PIN or the actual password.

9. Method according to one of the preceding claims, **characterised in that** the writing input surface is combined with at least one fingerprint sensor of any desired technology.

10. Method according to claim 9, **characterised in that** ten sensors are integrated, each one being arranged on a field for the input of a PIN or a password and, in particular, the finger sensor checking the identity of the person upon each operation.

11. Device for detecting writing pressures, signatures, handwritten PINs or passwords by measuring, storing and evaluating the pressures and changes in pressure exerted by a writer on a writing input surface provided with the means for carrying out a method according to one of claims 1 to 10.

## Revendications

1. Procédé de détection de pressions d'écriture, de signatures, de numéros d'identification personnels (PIN) écrits en main propre ou de mots de passe par la mesure, l'enregistrement et l'analyse des pressions et des changements de pression qu'exerce une personne en écrivant sur une surface de saisie graphique, **caractérisé en ce que** l'écart proportionnel à la pression d'écriture entre un plateau d'écriture monté sur ressorts et des capteurs est mesuré à l'aide d'au moins trois capteurs optiques mécaniquement découplés du plateau d'écriture, en particulier sous forme de barrières photoélectriques reflex.

2. Procédé selon la revendication 1, **caractérisé en ce que** les barrières photoélectriques reflex sont situées au-dessous du plateau d'écriture, à une certaine distance du plateau d'écriture et latéralement au plateau d'écriture, si bien qu'elles rayonnent contre le dessous du plateau d'écriture.

3. Procédé selon la revendication 1 ou 2, **caractérisé en ce que**, pour économiser de l'énergie et de l'espace, sont utilisés comme capteurs un émetteur de lumière, qui dirige ses rayons lumineux sur les points de mesure à l'aide de fibres optiques, et quatre récepteurs de lumière cadencés, qui reçoivent des rayons lumineux réfléchis à l'aide de fibres optiques.

4. Procédé selon la revendication 3, **caractérisé en ce que** l'émetteur de lumière et le récepteur de lumière sont montés à une certaine distance, en particulier par rapport au calculateur ou à l'ordinateur, et sont reliés à l'aide de fibres optiques.

5. Procédé selon l'une quelconque des revendications précédentes, **caractérisé en ce que** les barrières photoélectriques reflex sont intégrées dans un afficheur à cristaux liquides de taille et de forme géométrique voulues et **en ce qu'**une surface de saisie graphique transparente est disposée par-dessus.

6. Procédé selon l'une quelconque des revendications précédentes, **caractérisé en ce qu'**un afficheur à cristaux liquides avec surface inscriptible est doté sur la face arrière d'au moins trois barrières photoélectriques reflex.

7. Procédé selon l'une quelconque des revendications précédentes, **caractérisé en ce que** les mouvements du plateau sont enregistrés par des capteurs de distance, en particulier des capteurs de déplacement, et **en ce que** ces valeurs de mesure enregistrées sont analysées et sauvegardées et/ou transférées.

8. Procédé selon la revendication 5, **caractérisé en ce que** sur l'afficheur à cristaux liquides, la situation des chiffres ou des caractères peut à chaque demande de saisie être modifiée par un générateur de nombres aléatoires de telle sorte qu'en tapant un numéro d'identification personnel (PIN) ou un mot de passe sur la surface de saisie graphique transparente disposée par-dessus, une autre situation est toujours utilisé et il est par conséquent impossible pour un observateur de déduire le numéro d'identification personnel (PIN) réel ou le mot de passe réel.

9. Procédé selon l'une quelconque des revendications précédentes, **caractérisé en ce que** la surface de saisie graphique est combinée à au moins un capteur d'empreintes digitales de technologie voulue.

10. Procédé selon la revendication 9, **caractérisé en ce que** 10 capteurs sont intégrés, chacun d'eux étant disposé au niveau d'un champ de saisie d'un numéro d'identification personnel (PIN) ou d'un mot de passe et, plus particulièrement, le capteur d'empreintes digitales contrôlant à chaque sollicitation l'identité de la personne.

11. Dispositif de détection de pressions d'écriture, de signatures, de numéros d'identification personnels (PIN) écrits en main propre ou de mots de passe par la mesure, l'enregistrement et l'analyse des pressions et des changements de pression qu'exerce une personne en écrivant sur une surface de saisie graphique, qui dispose des moyens permettant la réalisation d'un procédé suivant l'une des revendications 1 à 10.
